(19) Europäisches Patentamt
European Patent Office
Office européen des brevets

(11) **EP 4 318 707 B1**

(12) **EUROPEAN PATENT SPECIFICATION**

(45) Date of publication and mention of the grant of the patent:
**03.12.2025 Bulletin 2025/49**

(21) Application number: **22861642.1**

(22) Date of filing: **19.08.2022**

(51) International Patent Classification (IPC):
***H01M 10/0565*** *(2010.01)* ***H01M 4/58*** *(2010.01)*
***H01M 10/0525*** *(2010.01)* ***H01M 10/0567*** *(2010.01)*

(52) Cooperative Patent Classification (CPC):
**H01M 10/0565; H01M 4/5825; H01M 10/0525; H01M 10/0567;** H01M 2300/0085; Y02E 60/10

(86) International application number:
**PCT/KR2022/012413**

(87) International publication number:
**WO 2023/027432 (02.03.2023 Gazette 2023/09)**

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2021 KR 20210111029**

(43) Date of publication of application:
**07.02.2024 Bulletin 2024/06**

(73) Proprietor: **LG ENERGY SOLUTION, LTD.**
**Seoul 07335 (KR)**

(72) Inventors:
- **KANG, Yong Hee**
  **Daejeon 34122 (KR)**
- **JANG, Min Chul**
  **Daejeon 34122 (KR)**
- **KWON, O Jong**
  **Daejeon 34122 (KR)**
- **CHOI, Jung Hun**
  **Daejeon 34122 (KR)**
- **YOUN, Hee Chang**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 1 489 672**
**EP-A1- 3 203 564**
**WO-A1-2021/025535**
**WO-A1-2021/025535**
**KR-A- 20040 020 633**
**KR-A- 20040 080 932**
**KR-A- 20160 040 127**
**KR-A- 20180 015 841**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 318 707 B1

## Description

### TECHNICAL FIELD

The present invention relates to a lithium secondary battery having improved life characteristics and safety.

### BACKGROUND ART

A lithium secondary battery is generally prepared by a method in which, after an electrode assembly is formed by interposing a separator between a positive electrode including a positive electrode active material formed of a transition metal oxide containing lithium, and a negative electrode including a negative electrode active material capable of storing lithium ions, the electrode assembly is inserted into a battery case, an electrolyte, which becomes a medium for transferring the lithium ions, is injected thereinto and the battery case is then sealed.

Lithium secondary batteries can be miniaturized and have high energy density and operating voltage, and thus have been applied to various fields such as mobile devices, electronic products, and electric vehicles. As the application fields of lithium secondary batteries are diversified, physical property requirements are gradually increasing, and in particular, development of lithium secondary batteries capable of being stably driven even under high temperature conditions is being required.

At high temperatures, $PF_6^-$ anions may be thermally decomposed from a lithium salt such as $LiPF_6$ contained in the electrolyte to generate a Lewis acid such as $PF_5$, which reacts with moisture to generate HF. Transition metals of the positive electrode material may be eluted into the electrolyte due to the decomposition products such as $PF_5$ and HF, and the unstable structural change of the positive electrode during charge and discharge. In particular, when a lithium iron phosphate (LFP) positive electrode is included, the structural stability of the positive electrode may be increased, but the electrolyte decomposition due to the elution of iron and the deterioration of the performance of the battery are intensified, and thus there is a need to improve this.

EP 3203564 A1 describes a gel polymer electrolyte including a polymer network, and an electrolyte solution impregnated in the polymer network, wherein the polymer network is formed by combining a first oligomer, which includes a unit derived from a monomer including at least one copolymerizable acrylate or acrylic acid, one unit including urethane, and another unit including alkylene group substituted with one or more fluorine, in a three-dimensional structure, and a lithium secondary battery including the gel polymer electrolyte.

EP 1489672 A1 describes a method for manufacturing a cathode active material comprising: a mixing step of mixing at least $Fe_3(PO_4)_2*nH_2O$ (n designates the number of hydrates and ranges from 0 to 8.) with $Li_3PO_4$; and a sintering step of sintering a mixed material obtained in the mixing step when the cathode active material represented by a composition of $Li_xFe_{1-y}M_yPO_4$ (M is at least a kind of materials such as Mn, Cr, Co, Cu, Ni, V, Mo, Ti, Zn, AJ, Ga, Mg, B, and Nb, x is located within a range expressed by $0.05 \leq x \leq 1.2$, and y is located within a range expressed by $0 \leq y < 0.8$.) is synthesized, wherein a halfvalue width of a maximum diffraction peak of the mixed material in an X-ray diffraction using CuK alpha ray is 1.0 DEG or smaller.

### DISCLOSURE OF THE INVENTION

### TECHNICAL PROBLEM

An aspect of the present invention provides a lithium secondary battery having improved capacity retention and safety in order to solve limitations of the electrolyte decomposition due to the elution of iron and gas generation at high temperatures in a lithium secondary battery including a LFP positive electrode.

### TECHNICAL SOLUTION

According to an aspect of the present invention, there is provided a lithium secondary battery including: a gel polymer electrolyte which is a polymerization reaction product of a composition containing a lithium salt, an organic solvent, an oligomer, a lithium salt-based additive and a polymerization initiator; a positive electrode containing a lithium iron phosphate-based composite oxide; a negative electrode containing a negative electrode active material; and a separator disposed between the positive electrode and the negative electrode, wherein the oligomer is a polyvinylidene fluoride-based polymer containing a vinyl group or an acrylate group at the end thereof, the lithium salt-based additive is at least one selected from the group consisting of lithium difluoro oxalato borate, lithium tetrafluoro borate, lithium 2-trifluoromethyl-4,5-dicyanoimidazolide, and lithium difluorophosphate, and the lithium salt is different from the lithium salt-based additive.

## ADVANTAGEOUS EFFECTS

The present invention may achieve a lithium secondary battery having excellent capacity retention and safety at high temperatures by introducing a gel polymer electrolyte containing a specific oligomer and a lithium salt-based additive into a lithium secondary battery including a LFP-based positive electrode material.

## BRIEF DESCRIPTION OF THE DRAWINGS

FIG. 1 is a view illustrating a heat propagation simulation device used in Experimental Example 3 of the present invention.

## BEST MODE FOR CARRYING OUT THE INVENTION

Hereinafter, the present invention will be described in more detail.

As lithium secondary batteries are used in various fields such as electric vehicles, securing safety is an important task in preparation for the risk of explosion. Among the positive electrode materials of the lithium secondary batteries, the lithium iron phosphate (LFP)-based positive electrode active material does not change in the structure during the movement of lithium due to high structural safety, and thus has an excellent advantage in terms of safety.

However, in the LFP-based positive electrode material having an olivine structure, since the movement of lithium ions is performed by diffusion through a one-dimensional channel, if the elution of iron occurs due to an electrolyte decomposition reaction in a liquid electrolyte system and thus the lithium movement channel is disturbed, a loss of an irreversible capacity may occur as much, and thus the performance of the battery may deteriorate.

In addition, the LFP-based positive electrode material has excellent safety because an excessive amount of oxygen is not generated at high temperatures and thus ignition does not occur, but nevertheless, there is a limitation in that toxic gases are generated due to decomposition of the liquid electrolyte in a high-temperature environment and a vent is generated, which may damage all components of the battery.

Accordingly, the present inventors introduced a gel polymer electrolyte instead of a liquid electrolyte into a lithium secondary battery including a LFP-based positive electrode material, thereby reducing the driving force of iron ions, suppressing the elution of iron, and preventing the movement channels of lithium ions from being disturbed. In addition, the present inventors confirmed that the gel polymer electrolyte blocks thermal conduction through convection, and thus thermal propagation from the electrolyte to other components may be blocked.

In particular, the gel polymer electrolyte according to the present invention is prepared by using a composition containing a lithium salt-based additive, and thus stabilizes films formed on a positive electrode and a negative electrode to have an effect of improving high-temperature life characteristics. Specifically, the surface of the active material is stabilized by simultaneously forming films on the positive electrode and the negative electrode, thereby preventing the iron from being eluted from the LFP positive electrode and deposited on the negative electrode. In addition, the formation of an SEI layer including an inorganic component can contribute to strengthening the negative electrode film, and the formation of a reinforced film having a B-O-based component in the positive electrode can prevent the decomposition of the electrolyte salt.

The lithium secondary battery according to the present invention includes: a gel polymer electrolyte which is a polymerization reaction product of a composition containing a lithium salt, an organic solvent, an oligomer, and a polymerization initiator; a positive electrode containing a lithium iron phosphate-based composite oxide; a negative electrode containing a negative electrode active material; and a separator disposed between the positive electrode and the negative electrode, wherein the oligomer is a polyvinylidene fluoride-based polymer containing a vinyl group or an acrylate group at the end thereof.

The description of each composition is as follows.

### (1) Gel Polymer Electrolyte

The gel polymer electrolyte of the present invention is a polymerization reaction product of a composition containing a lithium salt, an organic solvent, an oligomer, a lithium salt-based additive, and a polymerization initiator.

Specifically, the gel polymer electrolyte may be prepared by injecting the composition into the secondary battery and then curing the composition by thermal polymerization. For example, the gel polymer electrolyte may be formed by *in-situ* polymerization of the composition inside the secondary battery.

More specifically, the gel polymer electrolyte may be prepared by performing the steps of: (a) inserting, into a battery case, an electrode assembly consisting of a positive electrode, a negative electrode, and a separator disposed between the positive electrode and the negative electrode; (b) injecting the composition of the present invention into the battery case; (c) wetting and aging the electrode assembly; and (d) polymerizing the composition to form a gel polymer

electrolyte.

In this case, the in-situ polymerization in the lithium secondary battery may be performed by using an electron beam (E-BEAM), γ-rays, a room temperature or high temperature aging process, and according to an embodiment of the present invention, may be performed through thermal polymerization. In this case, polymerization time required may be about 2 minutes to about 48 hours, and thermal polymerization temperature may be 60 °C to 100 °C, specifically, 60 °C to 80 °C.

More specifically, the in-situ polymerization in the lithium secondary battery is performed by adding and mixing a polymerization initiator and the oligomer in an organic solvent in which a lithium salt is dissolved, and then injecting the mixture into a battery cell. After an injection hole of the battery cell is sealed, thermal polymerization may be performed by heating the battery cell at about 60 °C to about 80 °C for 1 hour to 20 hours to prepare the gel polymer electrolyte of the present invention.

**(a) Oligomer**

In an embodiment of the present invention, the oligomer is a polyvinylidene fluoride (PVDF)-based polymer containing a vinyl group or an acrylate group at the end thereof. The oligomer contains a vinyl group or an acrylate group at the end thereof, and thus may react with the polymerization initiator to cause a cross-linking reaction by free radical polymerization, thereby forming an electrolyte in the form of a gel.

In an embodiment of the present invention, the gel polymer electrolyte includes a polymer network derived from the oligomer. The polymer network refers to the form in which the oligomers are bonded in a three-dimensional structure.

In an embodiment of the present invention, the end group may be represented by any one among Formulae E-1 to E-6.

[Formula E-1]

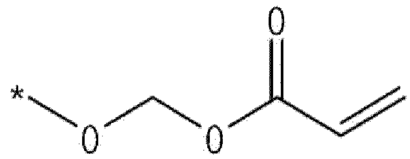

[Formula E-2]

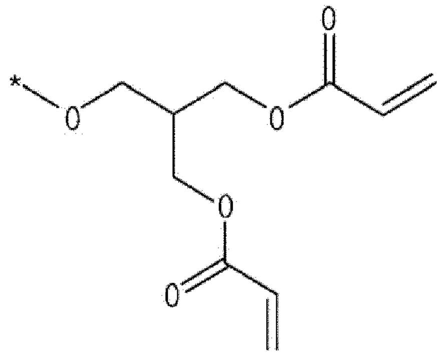

[Formula E-3]

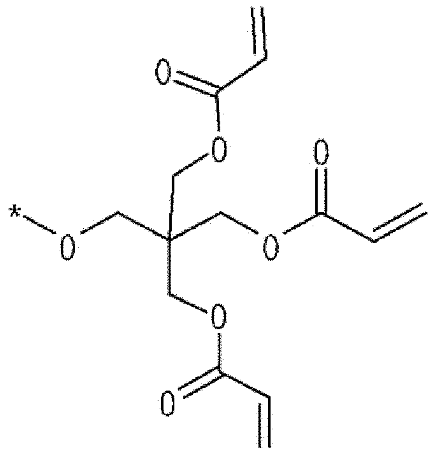

[Formula E-4]

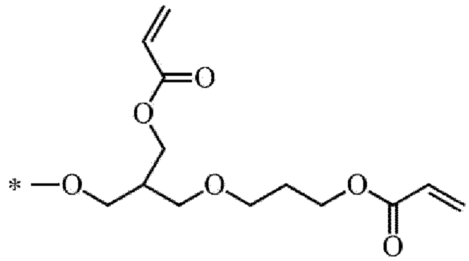

[Formula E-5]

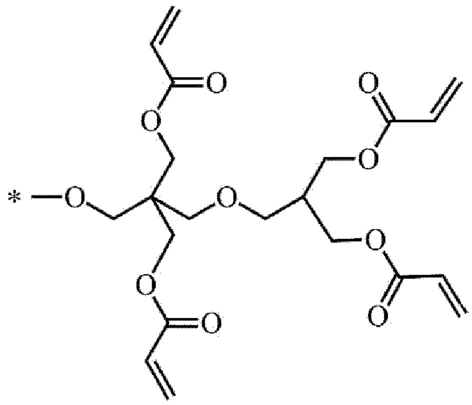

[Formula E-6]

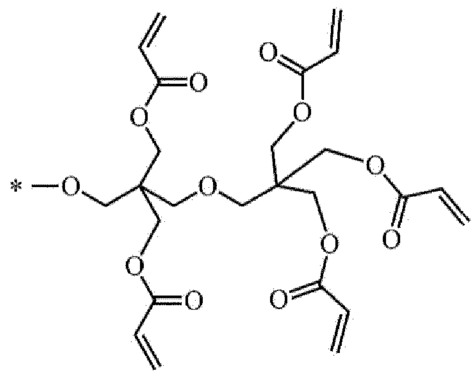

In an embodiment of the present invention, the oligomer contains a repeating unit derived from vinylidene fluoride (VDF), and may consist of the VDF-derived repeating unit except for the end group. In addition, the oligomer may further include at least one repeating unit selected from the group consisting of a hexafluoropropylene-derived repeating unit, a chlorotrifluoroethylene-derived repeating unit, and a tetrafluoroethylene-derived repeating unit. The oligomer is based on a PVDF structure, and thus contains a lot of F, thereby having excellent thermal stability.

In an embodiment of the present invention, the weight average molecular weight (Mw) of the oligomer may be adjusted by the number of repeating units, and may be about 1,000 g/mol to about 15,000 g/mol, specifically 3,000 g/mol to 12,000 g/mol, and more specifically 5,000 g/mol to 10,000 g/mol.

The weight average molecular weight is measured by gel permeation chromatography (GPC). Specifically, WATERS STYRAGEL HR3/HR4 (THF) was used as a column, and tetrahydrofuran (THF) (filtered with 0.45 m filter and used) was used as a solvent, and the weight average molecular weight was measured at a flow rate of 1.0 mL/min and a sample concentration of 1 mg/mL. The sample was injected in an amount of 100 $\mu$L, and the column temperature was set to 40 °C. A Waters RI detector was used as a detector and a reference was set with polystyrene (PS). Data processing was performed through the Empower3 program.

In an embodiment of the present invention, the oligomer content may be 1 wt% to 5 wt%, preferably 2 wt% to 5 wt%, and more preferably 3 wt% to 5 wt% based on a total weight of the composition.

When the oligomer content is 1 wt% or more, it is preferable in that physical advantages as a gel polymer electrolyte may be obtained as compared with a liquid electrolyte, and when the oligomer content is 5 wt% or less, it is preferable in terms of uniform gelation, resistance of the electrolyte, and conductivity.

### (b) Lithium salt

The lithium salt is different from the lithium salt-based additive, and may include $Li^+$ as a cation, and may include, as an anion, at least one selected from the group consisting of $F^-$, $Cl^-$, $Br^-$, $I^-$, $NO_3^-$, $N(CN)_2^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BC_4O_8^-$, $BF_2C_2O_4CHF$-, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_{3C}F_2(CF_3)_2CO^-$, $(CF_3SO_2)_2CH^-$, $CF_3(CF_2)_7SO_3^-$, and $SCN^-$.

Specifically, the lithium salt may be at least one selected from the group consisting of $LiPF_6$, $LiClO_4$, LiFSI, LiTFSI, $LiSO_3CF_3$, lithium bis(oxalate)borate (LiBOB), lithium difluoro(bisoxalato)phosphate (LiDFBP), lithium tetrafluoro(oxalate)phosphate (LiTFOP), and lithium fluoromalonato(difluoro) borate (LiFMDFB), and preferably $LiPF_6$. $LiPF_6$ is preferable as the lithium salt of the present invention in that $LiPF_6$ is well soluble in a carbonate solvent and has high ionic conductivity.

The lithium salt may be contained in a non-aqueous organic solution containing a lithium salt, an organic solvent, and a lithium salt-based additive so that the concentration of the lithium salt may be 0.5 M to 3.0 M, specifically, 1.0 M to 2.0 M. When the concentration of the lithium salt satisfies the above range, the lithium ion yield (Li+ transference number) and a degree of dissociation of the lithium ions may be improved to improve the output characteristics of the battery.

### (C) Organic Solvent

As the organic solvent, various organic solvents commonly used in lithium electrolytes may be used without limitation, but preferably, the organic solvent may include a cyclic carbonate-based solvent and a linear carbonate-based solvent.

The cyclic carbonate-based solvent is a highly viscous organic solvent which may well dissociate the lithium salt

in the electrolyte due to high permittivity, and may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate. Among these, ethylene carbonate (EC) may be included in order to secure high ionic conductivity.

In addition, the linear carbonate-based solvent is an organic solvent having low viscosity and low permittivity, and may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate.

In the present invention, the volume ratio of the cyclic carbonate-based solvent and the linear carbonate-based solvent may be 1:10 to 5:5, specifically 2:8 to 4:6, and more specifically 2:8 to 3:7.

In addition, in order to prepare an electrolyte solution having high ionic conductivity, the organic solvent may further include a linear ester-based solvent and/or a cyclic ester-based solvent with a low melting point and high stability at high temperatures in the cyclic carbonate-based solvent and/or the linear carbonate-based solvent.

The linear ester-based solvent may be at least one selected from the group consisting of methyl acetate, ethyl acetate, propyl acetate, methyl propionate, ethyl propionate, propyl propionate, and butyl propionate.

Also, the cyclic ester-based solvent may be at least one selected from the group consisting of γ-butyrolactone, γ-valerolactone, γ-caprolactone, σ-valerolactone, and ε-caprolactone.

Remainders except for the amounts of the other components other than the organic solvent, for example, the lithium salt, the oligomer, the polymerization initiator, and the additive in the total weight of the composition are all organic solvents unless otherwise stated.

**(d) Additive**

In an embodiment of the present invention, the lithium salt-based additive is at least one selected from the group consisting of lithium difluoro(oxalate)borate (LiODFB), lithium tetrafluoro borate ($LiBF_4$), lithium 2-trifluoromethyl-4,5-dicyanoimidazolide (LiTDI), and lithium difluorophosphate ($LiPO_2F_2$). The lithium salt-based additive may be preferably LiODFB. The lithium salt-based additive stabilizes the film formed on the positive electrode and the negative electrode to improve the high-temperature life characteristics, and specifically, since LiODFB has a higher reduction potential than $LiPF_6$, the lithium salt-based additive may be reduced first at the negative electrode to quickly form an inorganic SEI layer.

In an embodiment of the present invention, the lithium salt-based additive content may be 0.5 wt% to 3 wt% based on the total weight of the composition.

In an exemplary embodiment of the present invention, the concentration of the lithium salt-based additive in the non-aqueous organic solution containing the lithium salt, the organic solvent, and the lithium salt-based additive may be 0.5 M to 2.0 M.

Meanwhile, the composition may optionally further include an additive which may act as a complementary agent for forming a stable film on the surfaces of the negative electrode and the positive electrode, and suppressing the decomposition of the solvent, and improving mobility of lithium ions without significantly increasing the initial resistance.

The electrolyte for a lithium secondary battery of the present invention may optionally further include the following additives as necessary in order to prevent the non-aqueous electrolyte from being decomposed to cause collapse of an electrode in a high-voltage environment, or further improve low-temperature high-rate discharge characteristics, high-temperature stability, overcharge protection, and a battery swelling suppression effect at high temperatures.

For example, at least one compound selected from the group consisting of a carbonate-based compound, a halogen-substituted carbonate-based compound, a sultone-based compound, a sulfate-based compound, a phosphate-based compound, a borate-based compound, a nitrile-based compound, an amine-based compound, a silane-based compound, and a benzene-based compound may be included as an additive.

The cyclic carbonate-based compound may be at least one selected from the group consisting of vinylene carbonate (VC) and vinyl ethylene carbonate (VEC), and specifically may be vinylene carbonate.

The halogen-substituted carbonate-based compound may be fluoroethylene carbonate (FEC).

The sultone-based compound is a material capable of forming a stable solid electrolyte interphase (SEI) film on the surface of a negative electrode by a reduction reaction, and may be at least one selected from the group consisting of 1,3-propane sultone (PS), 1,4-butane sultone, ethene sultone, 1,3-propene sultone (PRS), 1,4-butene sultone, and 1-methyl-1,3-propene sultone, and specifically may be 1,3-propane sultone (PS).

The sulfate-based compound is a material capable of forming a stable SEI film that does not crack even during high-temperature storage by being electrically decomposed on the surface of a negative electrode, and may be at least any one selected from the group consisting of ethylene sulfate (Esa), trimethylene sulfate (TMS), and methyl trimethylene sulfate (MTMS) .

The phosphate-based compound may be at least one selected from the group consisting of lithium difluoro bis(oxalato)phosphate, lithium difluoro phosphate, tris(trimethylsilyl phosphate), tris(trimethylsilyl phosphite), tris(2,2,2-trifluoroethyl)phosphate, and tris(trifluoroethyl)phosphite.

The borate-based compound may be lithium tetraphenylborate.

The nitrile-based compound may be at least any one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The amine-based compound may be triethanolamine, ethylenediamine, or a mixture thereof, and the silane-based compound may be tetravinylsilane.

The benzene-based compound may be at least any one selected from the group consisting of monofluorobenzene, difluorobenzene, trifluorobenzene, and tetrafluorobenzene.

Meanwhile, the additive content except for the lithium salt-based additive may be 0.1 wt% to 10 wt%, preferably, 1 wt% to 5 wt% based on the total weight of the composition.

**(e) Polymerization initiator**

The composition of the present invention includes a typical polymerization initiator capable of generating radicals by heat and light.

The polymerization initiator may be a peroxide-based compound or an azo-based compound. The peroxide-based compound may be at least any one selected from the group consisting of benzoyl peroxide, acetyl peroxide, dilauryl peroxide, di-tert-butyl peroxide, t-butyl peroxy-2-ethylhexanoate, cumyl hydroperoxide, and hydrogen peroxide, but is not limited thereto.

The azo-based compound may be at least any one selected from the group consisting of 2,2'-azobis(2-cyanobutane), dimethyl 2,2'-azobis(2-methylpropionate), 2,2'-azobis(methylbutyronitrile), 2,2'-azobis(iso-butyronitrile) (AIBN), and 2,2'-azobis dimethyl-valeronitrile (AMVN), but is not limited thereto.

The polymerization initiator may be dissociated by heat in the battery, for a non-limiting example, at a temperature of 30 °C to 100 °C, specifically, 60 °C to 80 °C, or may be dissociated at room temperature (5 °C to 30 °C) to form a radical.

The polymerization initiator may be included in an amount of about 10 part by weight or less, specifically, 0.01 parts by weight to 10 parts by weight, more specifically, 0.1 parts by weight to 5 parts by weight based on 100 parts by weight of the oligomer, and, in the case where the polymerization initiator is included within the above range, since a gelation reaction may be facilitated, the occurrence of gelation during the injection of the composition into the battery or the cause of a side reaction by the remaining unreacted polymerization initiator after the polymerization may be prevented.

In particular, with respect to some polymerization initiators, nitrogen or oxygen gas may be generated during the occurrence of a radical by heat or the like. The gas generation most likely leads to a gas trap or gas bubbling phenomenon during the formation of the gel polymer electrolyte. Since the gas generation causes defects in the gel polymer electrolyte, this results in quality degradation of the electrolyte. Thus, in the case that the polymerization initiator is included within the above range, disadvantages, for example, the generation of a large amount of gas, may be more effectively prevented.

**(2) Positive Electrode**

The positive electrode according to the present invention includes a lithium iron phosphate (LFP)-based composite oxide. Specifically, the positive electrode may include a positive electrode collector and a positive electrode active material layer formed on the positive electrode collector, and the positive electrode active material included in the positive electrode active material layer may include the lithium iron phosphate-based composite oxide. More specifically, the positive electrode active material may consist of the lithium iron phosphate-based composite oxide.

The LFP-based positive electrode has an olivine structure, and has excellent structural stability and longterm life as compared with a layered positive electrode, such as an NCM-based positive electrode, having a risk of structural collapse. However, since the LFP-based positive electrode has high moisture sensitivity and voltage dependence and is vulnerable to elution of metal ions, when such problems are solved through the introduction of the gel polymer electrolyte of the present invention, a battery having stability and life superior to the NCM-based positive electrode can be obtained.

The positive electrode active material layer may be prepared by coating a positive electrode collector with a positive electrode slurry including a positive electrode active material, a binder, a conductive agent, a solvent, and so on, and then drying and rolling the coated positive electrode collector.

The positive electrode collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

In an embodiment of the present invention, the lithium iron phosphate-based composite oxide may be represented by Formula 1 below:

[Formula 1] $LiFe_{1-x}M_xPO_4$

In Formula 1 above,
M is at least any one selected from the group consisting of Ni, Co, Mn, Al, Mg, Y, Zn, In, Ru, Sn, Sb, Ti, Te, Nb, Mo, Cr, Zr, W, Ir, and V, and

$$0 \leq x < 1.$$

In an embodiment of the present invention, the lithium iron phosphate-based composite oxide may be $LiFePO_4$.
In an embodiment of the present invention, the positive electrode active material may further include other positive electrode active materials in addition to the lithium iron phosphate-based composite oxide. For example, the positive electrode active material may further include at least any one selected from the group consisting of lithium-manganese-based oxide such as $LiMnO_2$ and $LiMn_2O_4$; lithium-cobalt-based oxide such as $LiCoO_2$; lithium-nickel-based oxide such as $LiNiO_2$; lithium-nickel-manganese-based oxide such as $LiNi_{1-y}Mn_yO_2$ (where $0<Y<1$) and $LiMn_{2-z}Ni_zO_4$ (where $0<Z<2$); lithium-nickel-cobalt-based oxide such as $LiNi_{1-Y1}Co_{Y1}O_2$ (where $0<Y1<1$); lithium-manganese-cobalt-based oxide such as $LiCo_{1-Y2}Mn_{Y2}O_2$ (where $0<Y2<1$) and $LiMn_{2-z1}Co_{z1}O_4$ (where $0<Z1<2$); lithium-nickel-manganese-cobalt-based oxide such as $Li(Ni_pCo_qMn_{r1})O_2$ (where $0<p<1$, $0<q<1$, $0<r1<1$, and $p+q+r1=1$) and $Li(Ni_{p1}Co_{q1}Mn_{r2})O_4$ (where $0<p1<2$, $0<q1<2$, $0<r2<2$, and $p1+q1+r2=2$); and lithium-nickel-cobalt-transition metal (M) oxide such as $Li(Ni_{p2}Co_{q2}Mn_{r3}M_{s2})O_2$ (where M is selected from the group consisting of Al, Fe, V, Cr, Ti, Ta, Mg, and Mo, and p2, q2, r3, and s2 are atomic fractions of each independent elements, wherein $0<p2<1$, $0<q2<1$, $0<r3<1$, $0<S2<1$, and $p2+q2+r3+S2=1$).
The positive electrode active material may be included in an amount of 80 wt% to 99 wt%, specifically, 90 wt% to 99 wt% based on the total weight of solid content in the positive electrode slurry. In this case, when the positive electrode active material content is 80 wt% or less, energy density is reduced, and thus capacity may be reduced.
The binder in the positive electrode slurry is a component that assists in the binding between the active material and the conductive agent and in the binding with the current collector, and is commonly added in an amount of 1 wt% to 30 wt% based on a total weight of the solid content in the positive electrode slurry. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene ter monomer, a styrene-butadiene rubber, a nitrile-butadiene rubber, a fluoro rubber, various copolymers thereof, or the like.
Also, the conductive agent in the positive electrode slurry is a material capable of providing conductivity without causing adverse chemical changes in the battery, and may be added in an amount of 0.5 wt% to 20 wt% based on the total weight of the solid content in the positive electrode slurry.
For example, the conductive agent in the positive electrode slurry may be at least any one selected from the group consisting of carbon black such as acetylene black, Ketjen black, channel black, furnace black, lamp black, or thermal black; graphite powder such as natural graphite, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or a conductive material such as polyphenylene derivatives.
Furthermore, the solvent of the positive electrode slurry may include an organic solvent, such as N-methyl-2-pyrrolidone (NMP), and may be used in an amount such that desirable viscosity is obtained when the positive electrode active material, and optionally the binder, the conductive agent, and the like are included. For example, the solvent may be included in an amount such that a concentration of the solid content in the slurry including the positive electrode active material, and optionally the binder and the conductive agent is 10 wt% to 90 wt%, for example, 40 wt% to 85 wt%.

### (3) Negative Electrode

The negative electrode may be prepared by coating a negative electrode collector with a negative electrode slurry including a negative electrode active material, a binder, a conductive agent, and a solvent, and then drying and rolling the coated negative electrode collector.
The negative electrode collector generally has a thickness of 3 μm to 500 μm. The negative electrode collector is not particularly limited so long as it has high conductivity without causing adverse chemical changes surface the battery, and, for example, copper; stainless steel; aluminum; nickel; titanium; fired carbon; copper or stainless steel that is surface-treated with one of carbon, nickel, titanium, silver, or the like; an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.
Furthermore, the negative electrode active material may include at least one selected from the group consisting

of a lithium metal, a carbon material capable of reversibly intercalating/deintercalating lithium ions, a metal or an alloy of lithium and the metal, a metal composite oxide, a material which may be doped or undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

At least one selected from the group consisting of PbO, $PbO_2$, $Pb_2O_3$, $Pb_3O_4$, $Sb_2O_3$, $Sb_2O_4$ $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (where: Me is Mn, Fe, Pb, or Ge; Me' is Al, B, P, Si, Groups I, II and III elements of the periodic table, or halogen; $0<x \leq 1$; $1 \leq y \leq 3$; and $1 \leq z \leq 8$) may be used as the metal composite oxide.

The material, which may be doped or undoped with lithium, may include Si, $SiO_x$ ($0<x<2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithiumcontaining titanium composite oxide (LTO), vanadium oxide, and lithium vanadium oxide.

In the present invention, when the negative electrode active material is graphite, it is advantageous in terms of high temperature durability.

The negative electrode active material may be included in an amount of 80 wt% to 99 wt% based on a total weight of the solid content in the negative electrode slurry.

The binder in the negative electrode active material is a component that assists in the binding among the conductive agent, the active material, and the current collector, and is commonly added in an amount of 1 wt% to 30 wt% based on the total weight of the solid content in the negative electrode slurry. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a styrene-butadiene rubber, a nitrile-butadiene rubber, a fluoro rubber, styrene-butadiene-rubber-carboxymethyl cellulose (SBR-CMC), various copolymers thereof, or the like.

The conductive agent in the negative electrode active material is a component for further improving the conductivity of the negative electrode active material, and may be added in an amount of 0.5 wt% to 20 wt% based on the total weight of the solid content in the negative electrode slurry. The conductive agent is not particularly limited as long as it has conductivity without causing adverse chemical changes in the battery, and, for example, may be at least any one selected from the group consisting of carbon black such as acetylene black, Ketjen black, channel black, furnace black, lamp black, or thermal black; graphite powder such as natural graphite, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or a conductive material such as polyphenylene derivatives.

The solvent of the negative electrode slurry may include water; or an organic solvent, such as NMP or alcohol, and may be used in an amount such that desirable viscosity is obtained when the negative electrode active material, and optionally the binder and the conductive agent are included. For example, the solvent may be included in an amount such that a concentration of the solid content in the slurry including the negative electrode active material, and optionally the binder and the conductive agent is 40 wt% to 75 wt%, preferably, 40 wt% to 65 wt%.

**(4) Separator**

The lithium secondary battery according to the present invention includes a separator between the positive electrode and the negative electrode.

The separator separates the negative electrode and the positive electrode and provides a movement path of lithium ions, and any separator may be used without particular limitation as long as it is typically used as a separator in a lithium secondary battery, and particularly, a separator having an excellent electrolyte solution-retention ability as well as

low resistance to the transfer of electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers, polyethylene terephthalate fibers, or the like may be used. Furthermore, a coated separator including a ceramic component or a polymer material may be used in order to secure heat resistance or mechanical strength, and the separator having a single layer or multilayer structure may be optionally used.

The lithium secondary battery according to the present invention as described above may be suitably used in portable devices, such as mobile phones, notebook computers, and digital cameras, and electric vehicles such as hybrid electric vehicles (HEVs) .

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, a coin type, or the like may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail with reference to specific examples.

## MODE FOR CARRYING OUT THE INVENTION

### <Examples: Preparation of Lithium Secondary Battery>

#### Example 1.

(Electrolyte Composition Preparation)

$LiPF_6$ and lithium difluoro oxalato borate (LiODFB) were dissolved in an organic solvent in which ethylene carbonate (EC), ethyl methyl carbonate (EMC), and dimethyl carbonate (DMC) were mixed in a volume ratio of 30:40:30, so that $LiPF_6$ had a concentration of 1.0 M and LiODFB had a concentration of 1.0 M, thereby preparing a non-aqueous organic solution. Then, 2.0 wt% of PVDF (weight average molecular weight: 10,000 g/mol) including a group represented by Formula E-4 above as both end groups, 0.05 wt% of 2,2'-azobis(isobutyronitrile) (AIBN), and the balance of the non-aqueous organic solution were added to prepare an electrolyte composition having a total of 100 wt%.

(Positive Electrode Preparation)

A positive electrode active material ($LiFePO_4$), a conductive agent (carbon black), and a binder (polyvinylidene fluoride) were added to N-methyl-2-pyrrolidone (NMP), a solvent, in a weight ratio of 97.5:1:1.5 to prepare a positive electrode active material slurry (solid content of 60 wt%). A 15 μm-thick positive electrode collector (Al thin film) was coated with the positive electrode active material slurry, dried, and then roll-pressed to prepare a positive electrode.

(Negative Electrode Preparation)

A negative electrode active material (graphite), a conductive agent (carbon black), and a binder (polyvinylidene fluoride) were added to water, a solvent, in a weight ratio of 96:0.5:3.5 to prepare a negative electrode active material slurry (solid content of 50 wt%). A 8 μm-thick negative electrode collector (Cu thin film) was coated with the negative electrode active material slurry, dried, and then roll-pressed to prepare a negative electrode.

(Secondary Battery Preparation)

The positive electrode and the negative electrode prepared by the above-described method were laminated together with a polyethylene porous film as a separator to prepare an electrode assembly, and then the electrode assembly was placed in a battery case, 120 mL of the electrolyte composition was injected thereto, the battery case was sealed, and aged for 2 days. Thereafter, a thermal polymerization was performed by curing at 60°C for 5 hours to prepare a pouch-type

lithium secondary battery including a gel polymer electrolyte.

**Example 2.**

A lithium secondary battery was prepared in the same manner as in Example 1 except that the amount of the oligomer including the group represented by Formula E-4 above was changed to 3 wt% in the electrolyte composition preparation.

**Example 3.**

A lithium secondary battery was prepared in the same manner as in Example 1 except that the amount of the oligomer including the group represented by Formula E-4 above was changed to 5 wt% in the electrolyte composition preparation.

**Comparative Example 1.**

(Liquid Electrolyte Preparation)

$LiPF_6$ was dissolved in an organic solvent in which ethylene carbonate (EC), ethyl methyl carbonate (EMC), and dimethyl carbonate (DMC) were mixed in a volume ratio of 30:40:30, so that $LiPF_6$ had a concentration of 1.0 M, thereby preparing a liquid electrolyte.

(Positive Electrode Preparation)

A positive electrode was prepared in the same manner as in Example 1.

(Negative Electrode Preparation)

A negative electrode was prepared in the same manner as in Example 1.

(Secondary Battery Preparation)

The positive electrode and the negative electrode prepared by the above-described method were laminated together with a polyethylene porous film as a separator to prepare an electrode assembly, and then the electrode assembly was placed in a battery case, 120 mL of the liquid electrolyte was injected thereto to prepare a pouch-type lithium secondary battery.

**Comparative Example 2.**

A lithium secondary battery was prepared in the same manner as in Comparative Example 1 except that in the liquid electrolyte preparation, $LiPF_6$ and LiODFB were dissolved in an organic solvent in which ethylene carbonate (EC), ethyl methyl carbonate (EMC), and dimethyl carbonate (DMC) were mixed in a volume ratio of 30:40:30, so that $LiPF_6$ and LiODFB each had a concentration of 1.0 M.

**Comparative Example 3.**

A lithium secondary battery was prepared in the same manner as in Comparative Example 1 except that an NCMA positive electrode prepared by the following method was used as a positive electrode.

In the positive electrode preparation, a positive electrode active material (Li $[Ni_{0.86}Co_{0.10}Mn_{0.02}Al_{0.02}]O_2$), a conductive agent (carbon black), and a binder (polyvinylidene fluoride) were added to N-methyl-2-pyrrolidone (NMP), a solvent, in a weight ratio of 97.5:1:1.5 to prepare a positive electrode active material slurry (solid content of 60 wt%). A lithium secondary battery was prepared in the same manner as in Comparative Example 1 except that a 15 μm-thick positive electrode collector (Al thin film) was coated with the positive electrode active material slurry, dried, and then roll-pressed to prepare a positive electrode.

**Comparative Example 4.**

A lithium secondary battery was prepared in the same manner as in Example 3 except that an NCMA positive

electrode in Comparative Example 3 was used as a positive electrode.

**Comparative Example 5.**

A lithium secondary battery was prepared in the same manner as in Example 3 except that LiODFB was not added in the electrolyte composition preparation.

**<Experimental Example: Lithium Secondary Battery Performance Evaluation>**

**Experimental Example 1: High-temperature Life Characteristic Evaluation - Capacity Retention and Resistance Increase Rate Measurement**

After each of the secondary batteries prepared in Examples 1-3 and Comparative Example 1-5 was activated at a CC of 0.1 C, degassing was performed.

Thereafter, each secondary battery was charged at a CC of 0.33 C to 3.6 V under a constant current-constant voltage (CC-CV) condition at 25 °C, then subjected to 0.05 C current cut-off, and discharged at a CC of 0.33 C to 2.5 V.

Next, each secondary battery was charged at a CC of 0.33 C to 3.6 V under a constant current-constant voltage (CC-CV) condition at 45 °C, then subjected to 0.05 C current cut-off, and discharged at a CC of 0.33 C to 2.5 V. The charge and discharge were set as one cycle, and charge and discharge were performed at a high temperature (45 °C), and discharge capacity and resistance were measured at each of 100-th cycle and 200-th cycle using charge/discharge equipment (5 V, 100 A). The measured discharge capacity and resistance were put into [Equation 1] and [Equation 2] respectively to calculate capacity retention and resistance increase rate (%), and the results thereof are listed in Table 1 below.

$$\text{Capacity retention (\%)} = (\text{discharge capacity at the cycle/discharge capacity after 1 cycle}) \times 100 \qquad \text{[Equation 1]}$$

$$\text{Resistance increase rate (\%)} - \{ (\text{resistance after charging and discharging at the cycle - resistance after 1 cycle})/\text{resistance after 1 cycle}\} \times 100 \qquad \text{[Equation 2]}$$

**Experimental Example 2. Fe Elution Amount Measurement**

After the life characteristics (*i.e.,* after 200 cycles) were evaluated, the secondary batteries prepared in Examples 1-3 and Comparative Examples 1-5 were disassembled, and then the amount of Fe deposited on the negative electrode was confirmed by ICP analysis method (ICP-OES, Perkin Elmer, Inc.), and the results are listed in Table 1 below.

[Table 1]

| Example No. | Positive Electrode Material | Oligomer content | Concentration of LiODFB | Experimental Example 1 : Capacity retention (%) | | Experimental Example 1 : Resistance increase rate (%) | | Experimental Example 2 : Fe elution amount (%) |
|---|---|---|---|---|---|---|---|---|
| | | | | @100cy c | @200cy c | @100cy c | @200cy c | |
| Example 1 | LFP | 2wt % | 1M | 95.6 | 93.3 | 9.9 | 5.6 | 73 |
| Example 2 | LFP | 3wt % | 1M | 96.2 | 93.6 | 9.7 | 5.4 | 65 |
| Example 3 | LFP | 5wt % | 1M | 96.3 | 93.7 | 10.0 | 6.1 | 63 |
| Comparative Example 1 | LFP | - | - | 94.0 | 91.0 | 13.2 | 18.5 | 100 |
| Comparative Example 2 | LFP | - | 1M | 95.0 | 92.8 | 9.5 | 5.5 | 91 |

(continued)

| Example No. | Positive Electrode Material | Oligomer content | Concentration of LiODFB | Experimental Example 1 : Capacity retention (%) | | Experimental Example 1 : Resistance increase rate (%) | | Experimental Example 2 : Fe elution amount (%) |
|---|---|---|---|---|---|---|---|---|
| | | | | @100cy c | @200cy c | @100cy c | @200cy c | |
| Comparative Example 3 | NCMA | - | - | 96.0 | 92.5 | 12.8 | 17.5 | - |
| Comparative Example 4 | NCMA | 5wt % | 1M | 96.4 | 92.8 | 11.5 | 13.8 | - |
| Comparative Example 5 | LFP | 5wt % | - | 94.8 | 91.6 | 9.8 | 7.7 | 85 |

From the experimental results, it may be confirmed that the batteries in Examples 1-3 to which the gel polymer electrolyte was applied had a significantly decrease in Fe elution amount as compared with the batteries in Comparative Examples 1 and 2 to which the liquid electrolyte was applied. As the difference may be confirmed from the capacity retention and the resistance increase rate at the 100-th cycle and 200-th cycle, the batteries in Comparative Examples 1 and 2, which have a large amount of Fe elution, generate lithium dendrite due to metal foreign materials accumulated on the surface of the negative electrode as the cycle continues, thereby deteriorating the life characteristics of the battery. If the cycle is further repeated and the dendrite grows, there is a possibility that the dendrite may penetrate the separator and meet the positive electrode to cause a short circuit and ignition.

In addition, even if the gel polymer electrolyte according to the present invention is applied, when the lithium salt-based additive is not included as in Comparative Example 5, it may be confirmed that the capacity retention is reduced, the resistance increase rate is increased, and the Fe elution amount is also increased compared to the batteries of Examples 1 to 3.

Meanwhile, through Comparative Examples 3 and 4, when the positive electrode material is NCMA, it may be confirmed that no significant effect is exhibited even when the same electrolyte as in Example 3 is used.

Table 2 below shows the conversion of the results of Table 1 above, and specifically, in the battery employing each positive electrode material, it can be confirmed how high-temperature performance is improved by the introduction of a gel polymer electrolyte compared to the case of a liquid electrolyte.

In the case of the battery to which the LFP positive electrode material is applied, when the capacity retention, the resistance increase rate, and the initial resistance value measured in Comparative Example 1 are 100%, the relative values of Examples 1-3 are shown. In the case of the battery to which the NCMA positive electrode material is applied, when the capacity retention, the resistance increase rate, and the initial resistance value measured in Comparative Example 3 are 100%, the relative values of Comparative Example 4 are shown.

[Table 2]

| Positive Electrode Material | Example No. | Oligomer content | Concentration of LiODFB | Capacity retention (%) compared to Comparative Example | | Resistance increase rate (%) compared to Comparative Example | | Initial resistance (%) compared to Comparative Example |
|---|---|---|---|---|---|---|---|---|
| | | | | @100cyc | @200cyc | @100cyc | @200cyc | @1cyc |
| LFP | Comparative Example 1 | - | - | 100 | 100 | 100 | 100 | 100 |
| | Example 1 | 2wt% | 1M | 101.7 | 102.5 | 75.0 | 30.3 | 113 |
| | Example 2 | 3wt% | 1M | 102.3 | 102.9 | 73.5 | 29.2 | 119 |
| | Example 3 | 5wt% | 1M | 102.4 | 103.0 | 75.8 | 33.0 | 124 |

(continued)

| Positi ve Electr ode Materi al | Example No. | Olig omer cont ent | Conc entr atio n of LiOD FB | Capacity retention (%) compared to Comparative Example | | Resistance increase rate (%) compared to Comparative Example | | Initial resistan ce (%) compared to Comparat ive Example |
|---|---|---|---|---|---|---|---|---|
| | | | | @100cyc | @200cyc | @100cyc | @200cyc | @1cyc |
| NCMA | Comparative Example 3 | - | - | 100 | 100 | 100 | 100 | 100 |
| | Comparative Example 4 | 5wt % | 1M | 100.4 | 100.3 | 89.8 | 78.9 | 137 |

Referring to the results of Table 2, it may be confirmed that Examples 1-3 obtained an improvement effect of 1.7% or more at the 100-th cycle capacity retention and an improvement effect of 2.5% or more at the 200-th cycle capacity retention compared to Comparative Example 1. On the other hand, it may be confirmed that the capacity retention in Comparative Example 4 differs from that of Comparative Example 3 by less than 0.5%.

In addition, in Examples 1 to 3, it may be confirmed that the 100-th cycle resistance increase rate is improved to about 25% compared to Comparative Example 1, but in Comparative Example 4, only about 10% is improved compared to Comparative Example 3. In particular, it may be confirmed that the 200-th cycle resistance increase rate exhibited a much larger difference in the degree of improvement.

Meanwhile, by comparing the initial resistance values measured after one cycle, it may be confirmed that in the case of the battery using the LFP positive electrode, the increase in the initial resistance due to the introduction of the gel polymer electrolyte is 13% to 24%, but in the case of the battery using the NCMA positive electrode, the increase in the initial resistance due to the introduction of the gel polymer electrolyte is 37%.

According to the experimental results, it may be confirmed that, in the case of the battery using the LFP positive electrode, the inhibition of the elution of Fe has a significant impact on the performance improvement of the battery, and the gel polymer electrolyte disclosed in the present invention is used, thereby achieving the effect.

**Experimental Example 3. Thermal Propagation Test**

A thermal propagation test was performed on each of the secondary batteries prepared in Examples 1-3 and Comparative Examples 1, 3, and 4 through a thermal propagation simulation device shown in FIG. 1. Specifically, two batteries to be tested were prepared between the first plate and the second plate, which are Al plates (thickness: 10 mm), sequentially stacked as a first battery and a second battery, and then a heating pad was positioned to locally contact the first battery. After the batteries were heated to 400 °C at 30 °C/min through the heating pad, the items in Table 3 below were evaluated.

Specifically, the amount of gas generated and the vent pressure were measured using a gas collector, and relative results are shown assuming the value measured in Comparative Example 1 as 100%. As to whether or not the first battery and the second battery ignite, FAIL indicates the case where each of the first battery and the second battery ignites, and PASS indicates the case where the first battery and the second battery do not ignite.

**[Table 3]**

| Example No. | Positi ve Electr | Oligo mer | Concent ration | Experimental Example 3 | | | |
|---|---|---|---|---|---|---|---|
| | | | | Amount of gas | | Presence of ignition | |
| | ode Materi al | conte nt | of LiODFB | generat ed (%) | Vent pressu re (%) | First batter y | Second batter y |
| Example 1 | LFP | 2wt% | 1M | 92 | 160 | FAIL | PASS |
| Example 2 | LFP | 3wt% | 1M | 89 | 211 | PASS | PASS |
| Example 3 | LFP | 5wt% | 1M | 79 | 236 | PASS | PASS |
| Comparative Example 1 | LFP | - | - | 100 | 100 | FAIL | FAIL |

(continued)

| Example No. | Positi ve Electr | Oligo mer | Concent ration | Experimental Example 3 | | | |
|---|---|---|---|---|---|---|---|
| | | | | Amount of gas | | | Presence of ignition |
| | ode Materi al | conte nt | of LiODFB | generat ed (%) | Vent pressu re (%) | First batter y | Second batter y |
| Comparative Example 3 | NCMA | - | - | 127 | 183 | FAIL | FAIL |
| Comparative Example 4 | NCMA | 5wt % | 1M | 110 | 243 | FAIL | FAIL |

From the experimental results, it may be confirmed that the batteries in Examples 1-3 to which the gel polymer electrolyte was applied had excellent thermal stability compared to Comparative Example 1 to which the liquid electrolyte was applied. In particular, as shown in Example 1, it may be confirmed that even when the first battery is ignited, it does not affect the second battery, and thus the battery in Example 1 is very advantageous in terms of safety. In addition, it may be confirmed that due to the high density of the gel polymer electrolyte, the amount of gas generated was rather reduced although the vent pressure was high.

Meanwhile, through Comparative Examples 3 and 4, it may be confirmed that in the case of the battery including the NCMA positive electrode, the amount of gas generated was slightly reduced by introducing the gel polymer electrolyte according to the present invention, but the ignition was not prevented.

## Claims

**1.** A lithium secondary battery including:

a gel polymer electrolyte which is a polymerization reaction product of a composition containing a lithium salt, an organic solvent, an oligomer, a lithium salt-based additive, and a polymerization initiator;
a positive electrode;
a negative electrode containing a negative electrode active material; and
a separator disposed between the positive electrode and the negative electrode,
**characterized in that**:

the positive electrode contains a lithium iron phosphate-based composite oxide,
the oligomer is a polyvinylidene fluoride-based polymer containing a vinyl group or an acrylate group at the end thereof,
the lithium salt-based additive is at least one selected from the group consisting of lithium difluoro oxalato borate, lithium tetrafluoro borate, lithium 2-trifluoromethyl-4,5-dicyanoimidazolide, and lithium difluorophosphate, and
the lithium salt is different from the lithium salt-based additive.

**2.** The lithium secondary battery of claim 1, wherein the gel polymer electrolyte comprises a polymer network derived from the oligomer.

**3.** The lithium secondary battery of claim 1, wherein the oligomer contains a repeating unit derived from vinylidene fluoride.

**4.** The lithium secondary battery of claim 1, wherein the oligomer content is 1 wt% to 5 wt% based on a total weight of the composition.

**5.** The lithium secondary battery of claim 1, wherein the oligomer has a weight average molecular weight of 1,000 g/mol to 15,000 g/mol.

**6.** The lithium secondary battery of claim 1, wherein the concentration of the lithium salt-based additive in a non-aqueous organic solution containing the organic solvent and the lithium salt-based additive is 0.5 M to 2.0 M.

7. The lithium secondary battery of claim 1, wherein the lithium iron phosphate-based composite oxide is represented by Formula 1 below:

[Formula 1] $LiFe_{1-x}M_xPO_4$

wherein, in Formula 1 above,
M is at least any one selected from the group consisting of Ni, Co, Mn, Al, Mg, Y, Zn, In, Ru, Sn, Sb, Ti, Te, Nb, Mo, Cr, Zr, W, Ir, and V, and

$$0 \leq x < 1.$$

8. The lithium secondary battery of claim 1, wherein the positive electrode comprises a positive electrode collector and a positive electrode active material layer formed on the positive electrode collector, and
the positive electrode active material comprised in the positive electrode active material layer comprises the lithium iron phosphate-based composite oxide.

9. The lithium secondary battery of claim 8, wherein the positive electrode active material consists of the lithium iron phosphate-based composite oxide.

**Patentansprüche**

1. Lithiumsekundärbatterie, die Folgendes einschließt:

einen Gelpolymerelektrolyten, der ein Polymerisationsreaktionsprodukt einer Zusammensetzung ist, die ein Lithiumsalz, ein organisches Lösungsmittel, ein Oligomer, ein Additiv auf Lithiumsalzbasis und einen Polymerisationsinitiator enthält,
eine positive Elektrode,
eine negative Elektrode, die ein Aktivmaterial für eine negativen Elektrode enthält, und
einen Separator, der zwischen der positiven Elektrode und der negativen Elektrode angeordnet ist,
**dadurch gekennzeichnet, dass**:

die positive Elektrode ein Mischoxid auf Lithiumeisenphosphatbasis enthält,
das Oligomer ein Polymer auf Polyvinylidenfluoridbasis ist, das eine Vinylgruppe oder eine Acrylatgruppe an seinem Ende enthält,
das Additiv auf Lithiumsalzbasis mindestens eines, ausgewählt aus der Gruppe, bestehend aus Lithiumdifluoroxalatoborat, Lithiumtetrafluorborat, Lithium-2-trifluormethyl-4,5-dicyanoimidazolid und Lithiumdifluorphosphat, ist und
sich das Lithiumsalz von dem Additiv auf Lithiumsalzbasis unterscheidet.

2. Lithiumsekundärbatterie nach Anspruch 1, wobei der Gelpolymerelektrolyt ein von dem Oligomer abgeleitetes Polymernetzwerk umfasst.

3. Lithiumsekundärbatterie nach Anspruch 1, wobei das Oligomer eine von Vinylidenfluorid abgeleitete Wiederholungseinheit enthält.

4. Lithiumsekundärbatterie nach Anspruch 1, wobei der Oligomergehalt 1 Gew.-% bis 5 Gew.-%, bezogen auf ein Gesamtgewicht der Zusammensetzung, beträgt.

5. Lithiumsekundärbatterie nach Anspruch 1, wobei das Oligomer ein gewichtsmittleres Molekulargewicht von 1.000 g/mol bis 15.000 g/mol aufweist.

6. Lithiumsekundärbatterie nach Anspruch 1, wobei die Konzentration des Additivs auf Lithiumsalzbasis in einer nichtwässrigen organischen Lösung, die das organische Lösungsmittel und das Additiv auf Lithiumsalzbasis enthält, 0,5 M bis 2,0 M beträgt.

7. Lithiumsekundärbatterie nach Anspruch 1, wobei das Mischoxid auf Lithiumeisenphosphatbasis durch die nachstehende Formel 1 dargestellt ist:

[Formel 1] $LiFe_{1-x}M_xPO_4$

wobei in der obigen Formel 1
M mindestens eines, ausgewählt aus der Gruppe, bestehend aus Ni, Co, Mn, Al, Mg, Y, Zn, In, Ru, Sn, Sb, Ti, Te, Nb, Mo Cr, Zr, W, Ir und V, ist und

$$0 \le x < 1.$$

8. Lithiumsekundärbatterie nach Anspruch 1, wobei die positive Elektrode einen Stromkollektor für eine positive Elektrode und eine Aktivmaterialschicht für eine positive Elektrode umfasst, die auf dem Stromkollektor gebildet ist, und
das in der Aktivmaterialschicht für eine positive Elektrode enthaltene Aktivmaterial für eine positive Elektrode das Mischoxid auf Lithiumeisenphosphatbasis umfasst.

9. Lithiumsekundärbatterie nach Anspruch 8, wobei das Aktivmaterial für eine positive Elektrode aus dem Mischoxid auf Lithiumeisenphosphatbasis besteht.

**Revendications**

1. Batterie secondaire au lithium incluant :

un électrolyte polymère en gel qui est un produit de réaction de polymérisation d'une composition contenant un sel de lithium, un solvant organique, un oligomère, un additif à base de sel de lithium et un initiateur de polymérisation ;
une électrode positive ;
une électrode négative contenant un matériau actif d'électrode négative ; et
un séparateur disposé entre l'électrode positive et l'électrode négative,
**caractérisée en ce que** :

l'électrode positive contient un oxyde composite à base de lithium fer phosphate,
l'oligomère est un polymère à base de fluorure de polyvinylidène contenant un groupe vinyle ou un groupe acrylate à son extrémité,
l'additif à base de sel de lithium est au moins un sélectionné dans le groupe consistant en le difluoro(oxalato) borate de lithium, le tétrafluoroborate de lithium, le 2-trifluorométhyl-4,5-dicyanoimidazolide de lithium et le difluorophosphate de lithium, et
le sel de lithium est différent de l'additif à base de sel de lithium.

2. Batterie secondaire au lithium selon la revendication 1, dans laquelle l'électrolyte polymère en gel comprend un réseau polymère dérivé de l'oligomère.

3. Batterie secondaire au lithium selon la revendication 1, dans laquelle l'oligomère contient un motif de répétition dérivé du fluorure de vinylidène.

4. Batterie secondaire au lithium selon la revendication 1, dans laquelle la teneur en oligomères est comprise entre 1 % et 5 % en poids par rapport au poids total de la composition.

5. Batterie secondaire au lithium selon la revendication 1, dans laquelle l'oligomère présente un poids moléculaire moyen en poids de 1000 g/mol à 15 000 g/mol.

6. Batterie secondaire au lithium selon la revendication 1, dans laquelle la concentration de l'additif à base de sel de lithium dans une solution organique non aqueuse contenant le solvant organique et l'additif à base de sel de lithium est de 0,5 M à 2,0 M.

**7.** Batterie secondaire au lithium selon la revendication 1, dans laquelle l'oxyde composite à base de lithium fer phosphate est représenté par la formule 1 ci-dessous :

[Formule 1] $LiFe_{1-x}M_xPO_4$

dans laquelle, dans la formule 1 ci-dessus,
M est au moins l'un quelconque des éléments sélectionnés dans le groupe consistant en Ni, Co, Mn, Al, Mg, Y, Zn, In, Ru, Sn, Sb, Ti, Te, Nb, Mo, Cr, Zr, W, Ir et V, et

$$0 \leq x < 1.$$

**8.** Batterie secondaire au lithium selon la revendication 1, dans laquelle l'électrode positive comprend un collecteur d'électrode positive et une couche de matériau actif d'électrode positive formée sur le collecteur d'électrode positive, et
le matériau actif d'électrode positive compris dans la couche de matériau actif d'électrode positive comprend l'oxyde composite à base lithium fer phosphate.

**9.** Batterie secondaire au lithium selon la revendication 8, dans laquelle le matériau actif d'électrode positive consiste en l'oxyde composite à base de lithium fer phosphate.

[FIG. 1]

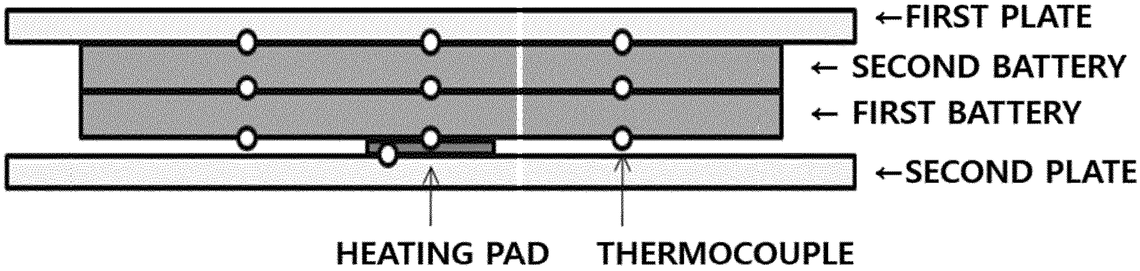
←FIRST PLATE
← SECOND BATTERY
← FIRST BATTERY
←SECOND PLATE
HEATING PAD
THERMOCOUPLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3203564 A1
- EP 1489672 A1